# EUROPÄISCHE PATENTSCHRIFT

(11) **EP 1 852 741 B1**
(45) Veröffentlichungstag und Bekanntmachung des Hinweises auf die Patenterteilung: **25.03.2009**
(21) Anmeldenummer: 07007791.2
(22) Anmeldetag: 17.04.2007
(51) Int. Cl.: G03B 17/14, H04N 5/225, G03B 7/20, G03B 17/18, G02B 7/14

(54) **Verfahren und Vorrichtung zur Identifizierung von Wechselobjektiven**
Method and device for identifying interchangeable lenses
Procédé et dispositif destinés à l'identification d'objectifs interchangeables

(30) Priorität: 24.04.2006 DE 102006019449
(43) Veröffentlichungstag der Anmeldung: 07.11.2007
(73) Patentinhaber: Leica Camera AG, 35606 Solms (DE)
(72) Erfinder: DENK Robert, 35619 Braunfels (DE); KRANZ, Gerhard, 35576 Wetzlar (DE); ZIELBERG, Oliver, 35582 Wetzlar (DE); LIES, Ulrich, 35578 Wetzlar (DE)
(74) Vertreter: Stamer, Harald

(56) Entgegenhaltungen:
- EP-B- 1 006 397
- DE-A1- 3 438 322
- DE-A1- 3 443 443
- US-A- 4 236 803
- US-A- 4 439 029

## Beschreibung

Die Erfindung betrifft ein Verfahren zur Identifizierung von Wechselobjektiven, die mit einer Anriegelvorrichtung in vorgegebener Lage mit einer Auflagefläche an einer Kamera eines Kamerasystems verbunden werden können und eine Vorrichtung gemäß dem Oberbegriff des Patentanspruchs 9 zur Durchführung des Verfahrens nach Patentanspruch 1.

Verfahren zum Informationsaustausch zwischen Wechselobjektiven eines Kamerasystems, die mit Hilfe einer üblicherweise als Bajonettverbindung ausgebildeten Anriegelvorrichtung an eine Auflagefläche an einer Systemkamera, beispielsweise eine Spiegelreflexkamera oder eine Messsucherkamera angerenkt werden können, sind bei moderneren Kamerasystemen an sich bekannt. Bei älteren mechanischen Kamerasystemen hingegen ist ein Informationsaustausch aufgrund fehlender Schnittstellen nicht möglich. Die Wechselobjektive von modernen Kamerasystemen verfügen in der Regel über elektrische Verbraucher, wie automatische Fokus- und Blendenverstellungsmechanismen. Die Bajonettverbindungen weisen daher oftmals mehrere elektrische Kontakte auf. Diese elektrischen Kontakte werden einerseits zur Stromversorgung der elektrischen Verbraucher im Objektiv und andererseits für Verfahren zur Übertragung von Signalen zwischen Objektiv und Kameragehäuse genutzt. Auf diese Weise ist eine bidirektionale Datenübertragung vom Kameragehäuse zum Objektiv ebenso möglich, wie eine Datenübertragung vom Objektiv zur Kamera. Bei solchen Verfahren zum Informationsaustausch werden sowohl Objektiveinstellungsinformationen, wie die aktuell eingestellte Entfernung oder Arbeitsblende an die Kamera übertragen, als auch Objektivgrunddaten, wie Brennweite und Öffnungsverhältnis. Sofern das Objektiv messbare Systemfehler, wie z.B. Vignettierung, Coma oder Schnittweitenfehler aufweist, können diese in einem Datenspeicher im Objektiv gespeichert und bei Bedarf zu Korrekturzwecken an die Kameraelektronik übertragen werden. Grundsätzlich ist bei derartigen Verfahren aber, eine Vielzahl von oftmals dicht nebeneinander angeordneten elektrischen Kontakten nötig, die störanfällig sind. Beispielsweise kann es beim Anrenken eines Objektivs an das Kameragehäuse zu unerwünschten elektrischen Verbindungen zwischen Kontakten kommen, die nicht miteinander verbunden werden sollen. Oftmals treten auch Kontaktierungsprobleme auf, nachdem die Kamera längere Zeit nicht benutzt wurde.

Zur Vermeidung dieser Probleme ist es aus EP 1 006 397 B1 bekannt, die Signalübertragung von der Stromversorgung zu trennen, indem zur kontaktlosen bidirektionalen optischen Signalübertragung Optokoppler verwendet werden. Unerwünschte Kurzschlüsse zwischen Signalanschlüssen und Stromversorgungsanschlüssen des Objektivs und des Kameragehäuses beim Einrenken des Objektivs werden auf diese Weise sicher verhindert.

Aus DE 34 38 322 A1 ist ein Verfahren zur Übertragung von Signaldaten zwischen Objektiv und einer Kamera eines Kamerasystems bekannt. Kameraseitig wird eine definierte Strahlung erzeugt, die entsprechend wenigstens einer mechanischen Stellgröße in mindestens einer ihrer Eigenschaften variiert und dann in ein elektrisches Signal gewandelt wird, das zum Anzeigen der Stellgröße und/oder zum Steuern von Kamerafunktionen benutzt wird. Auf diese Weise ist es möglich, Objektiveinstellungsinformationen vom Objektiv an die Kamera zu übertragen. Die im Kameragehäuse erzeugte definierte Strahlung wird zunächst mit Hilfe von aufwändigen optischen Mitteln zur Aufnahme und zum Leiten dieser Strahlung dem Objektiv zugeführt und anschließend zum Kameragehäuse zurückgeführt. Das Objektiv weist dazu zusätzliche Mittel auf, die die genannte Strahlung entsprechend wenigstens einer mechanischen Stellgröße in mindestens einer ihrer Eigenschaften variiert und auf diese Weise die Übertragung von Objektiveinstellungsinformationen ermöglicht. Im Kameragehäuse sind Mittel zur Auswertung im Hinblick auf die Anzeige dieser Informationen und/oder die Steuerung von Kamerafunktionen vorgesehen. Die Anordnung hat einen großen Platzbedarf und viele Einzelbauteile.

Eine weitere Einrichtung mit optischer Erfassung von Signaldaten lässt sich aus der DE 34 43 443 A1 entnehmen. Die während des Anrenkens des Objektivs zwangsläufig auftretende Relativbewegung zwischen Objektivfassung und Kamerakörper zueinander wird genutzt, um eine optisch lesbare Skalierung in Form eines Strichcodes am Aufnahmeobjektiv erfassen zu können. Die Erfassung des Strichcodes ist ausschließlich während des Anrenkvorgangs möglich. Da die Leseeinrichtung immer genau während des Anrenkvorgangs betriebsbereit sein muss, dieser Zeitpunkt aber nicht bekannt ist, sind Fehlfunktionen beim Erfassen der Skalierung nicht auszuschließen. Die Erfassung eines Strichcodes eines bereits angerenkten Objektivs, beispielsweise nach dem Einschalten der Kamera, ist nicht möglich. Die bekannten Verfahren sind bei Wechselobjektiven älterer mechanischer Kamerasysteme nicht verwendbar und ein Umrüsten vorhandener Objektive ist nicht, oder nur mit unwirtschaftlich hohem Aufwand möglich.

Aus US 4 439 029 ist eine Vorrichtung zur Übertragung von Kenndaten eins Wechselobjektivs zu einer Systemkamera bekannt. Auf der Anriegelfläche des Wechselobjektivs können unterschiedlich Licht reflektierende Bereiche zur binären Codierung der Kenndaten angeordnet sein. Innerhalb des Kameragehäuses sind den Code-Bereichen zugeordnete Licht-Sender und -Empfänger angeordnet. Die Übertragung des jeweiligen Sende- und Empfangs-Lichts erfolgt über Lichtleiter, die in der Anriegelfläche des Kameragehäuses angeordnet sind. Die Lichtleiter werden bidirektional genutzt. Zur Trennung des Sende- und Empfangs-Lichts sind Teilerspiegel vorgesehen. Die Vorrichtung enthält eine Vielzahl von Bauelementen, für die ein entsprechend großes Gehäusevolumen bereitgestellt werden muß. Lichtverluste an den Einzelelementen und insbesondere am Teilerspiegel müssen durch eine höhere Sendelichtleistung ausgeglichen werden, die die elektrische Versorgungskapazität belastet.

Der Erfindung lag daher die Aufgabe zu Grunde, auf einfache Weise der Kamera eines Kamerasystems Informationen zu dem angeschlossenen Wechselobjektiv zur Verfügung zu stellen, die Probleme der kontaktgebundenen Datenübertragung zu überwinden und eine Verbesserung der Bildergebnisse aufgrund erweiterter Informationen zum jeweiligen Wechselobjektiv zu ermöglichen. Objektive älterer Bauart sollen dabei ebenfalls mit einer solchen Funktionalität kostengünstig nachrüstbar, zumindest aber an neueren Kamerasystemen weiterverwendbar sein.

Diese Aufgabe wird erfindungsgemäß durch ein Verfahren mit den Merkmalen des Patentanspruchs 1 und durch eine Vorrichtung mit den Merkmalen des Patentanspruchs 9 gelöst. Vorteilhafte Ausgestaltungen der Erfindung ergeben sich aus den Merkmalen der weiteren Ansprüche.

Das erfindungsgemäße Verfahren zeichnet sich dadurch aus, dass nach erfolgter Anriegelung eine definierte optische Strahlung von zwei oder mehr, vorzugsweise sechs, in der Auflagefläche an der Kamera angeordneten Lichtsendern auf diesen zugeordnete Reflexions- oder Absorptionsflächen an der Anriegelvorrichtung gerichtet wird. Die Reflexions- und Absorptionsflächen sind vorzugsweise als Vertiefungen ausgebildete Flächenbereiche in der Anriegelungsvorrichtung des Wechselobjektivs. Zur Bildung von Reflexionsflächen hat sich das Auslegen der Vertiefungen mit einem weißen Lack bewährt und Absorptionsflächen werden vorzugsweise durch Auslegen mit einem matten schwarzen Lack hergestellt. Die von den jeweiligen weißen Reflexionsflächen und schwarzen Absorbtionsflächen zurückkehrende Strahlung wird von neben den Lichtsendern in der Auflagefläche angeordneten Lichtempfängern aufgenommen. Anschließend wird aus den Ausgangssignalen der Lichtempfänger ein binär codiertes Signal zur Identifizierung des Wechselobjektivs gebildet.

In vorteilhafter Weise wird das binär codierte Signal einer Rechnereinheit der Kamera zugeführt, die dem Code ein Wechselobjektiv mit bestimmten Grunddaten, wie Brennweite und Öffnungsverhältnis zuordnet. Der Kamera eines Kamerasystems werden auf diese einfache Weise Informationen zu dem angeschlossenen Wechselobjektiv zur Verfügung gestellt.

Reflektiert beispielsweise ausschließlich das erste (Reflektions-) Feld an der Anriegelvorrichtung des Objektivs die Strahlung und alle übrigen Felder reflektieren die Strahlung nicht (Absorptionsflächen), entspricht das dem binär codierten Signal 1 und kann zur Identifizierung des Wechselobjektivs 1 genutzt werden. Auf diese Weise ist es auch möglich, dem Wechselobjektiv spezifische Objektiv-Individualdaten, wie z.B. besondere Korrekturwerte zur Vignettierung, Coma oder Schnittweitenfehler des identifizierten Objektivs zuzuordnen. Mit sechs Feldern lassen sich 2 hoch 6 und damit 64 binäre Codierungen realisieren und können theoretisch zur Identifizierung von 64 verschiedenen Wechselobjektiven mit ihren jeweiligen individuellen Eigenschaften genutzt werden. Bei der Auswertung des binär codierten Signals durch eine Rechnereinheit der Kamera können insbesondere Kompatibilitätsprobleme mit älteren Wechselobjektiven mit gleicher mechanischer Anriegelungsvorrichtung gelöst werden. Ältere Objektive verfügen ohne Umrüstung nicht über spezielle Reflexions- und Absorbtionsflächen an ihrer Anriegelungsvorrichtung und erzeugen aufgrund einer allgemein recht guten Reflexion auf allen Flächenbereichen den binären Code 64, der allgemein zur Identifizierung älterer, nicht codierter Objektive verwendet werden kann.

Zur Bestätigung einer solchen Identifizierung eines älteren uncodierten Objektivs, die durch Verschmutzung der Fläche der Anriegelungsvorrichtung fehlerbehaftet sein kann, ist es vorteilhaft, einen weiteren von der eigentlichen Identifizierung unabhängigen Sensor vorzusehen. Dieser Sensor kann auf die Erkennung nicht codierter Objektive optimiert werden. Um Fehlfunktionen der Kamera, die durch die Verwendung systemfremder Objektive hervorgerufen werden zu verhindern, kann dieser Zusatzsensor ebenfalls zur Unterscheidung zwischen nicht codierten älteren Objektiven des Kamerasystems und systemfremden Objektiven genutzt werden. Ein weiterer zu berücksichtigender Fall, der nicht zur Identifizierung eines Objektivs führt ist der, wenn kein Objektiv mit der Kamera verbunden ist. Es ist daher vorteilhaft, den binären Code 0 (keine Reflexion der optischen Strahlung) beispielsweise als Störung oder "kein Objektiv vorhanden" auszuwerten.

Um ein Übersprechen von einem Lichtsender zu einem benachbarten, diesem Lichtsender aber auswertungstechnisch nicht zugeordneten, Lichtempfänger zu verhindern ist es vorteilhaft, wenn die Lichtsender zyklisch alternierend in vorbestimmten Zeitintervallen eingeschaltet werden und die ihnen zugeordneten Lichtempfänger synchron dazu die zurückkehrende Strahlung aufnehmen. Dieses Vorgehen ermöglicht es zusätzlich, Strom bei der Identifizierung zu sparen.

Eine besonders zuverlässige und schnellere Identifizierung ist durch eine parallele Auswertung möglich. Um dennoch das oben erwähnte Übersprechen zu verhindern, werden während eines Zyklus gleichzeitig mehrere nicht benachbarte Lichtsender- und Lichtempfängerpaare ausgewertet. Das Verfahren kann darin bestehen, gleichzeitig das 1. und 4., anschließend das 2. und 5. und dann das 3. und 6. Lichtsender- und Lichtempfängerpaare auszuwerten. Aber auch die gleichzeitige Auswertung der 1., 3. und 5. und anschließend der 2., 4. und 6. Lichtsender- und Lichtempfängerpaare ist zuverlässig und schnell.

Um von den Lichtsendern herrührendes Fehllicht bei der Bildaufnahme zu verhindern, ist es vorteilhaft, die Identifizierung eines Wechselobjektivs zeitlich getrennt von einer Bildaufnahme mit dem Objektiv durchzuführen.

Eine besonders gute Bereitstellung von Informationen zu einem an die Kamera angeschlossenen Wechselobjektiv wird erreicht, wenn die Zuordnung zwischen binär codiertem Signal und den Grunddaten des Wechselobjektivs herstellerseitig dauerhaft in einem Datenspeicher der Rechnereinheit der Kamera abgelegt wird. In besonders vorteilhafter Weise sind zusätzliche Objektiv-Individualdaten mit Hilfe von herstellerseitig bereitgestellten Datensätzen in einen veränderbaren Datenspeicher der Rechnereinheit transferierbar. Diese Datensätze können bei der Herstellung eines bestimmten Objektivs ermittelt und beispielsweise auf einem separaten, in die Kamera einführbaren Datenträger gespeichert werden. Eine besonders einfache Möglichkeit, diese Daten in den veränderbaren Datenspeicher zu transferieren besteht darin, diese von dem in die Kamera eingeführten Datenträger mit Hilfe eines kamerainternen Programms auszulesen und zu speichern.

In besonders vorteilhafter Weise werden mit Hilfe des Verfahrens bei einer digitalen Bildaufnahme unter Berücksichtigung der zu dem Wechselobjektiv gespeicherten Grunddaten- und/oder Individualdaten eine rechnergestützte Bildkorrektur oder Optimierung der Bildqualität durchgeführt und die korrigierten Bilddaten in einem Bilddatenspeicher gespeichert.

Zusätzlich bringt es Vorteile, wenn die jeweils ermittelten Objektivgrunddaten als Zusatzinformation im Bild oder in der Bilddatei (z.B. dem Header einer EXIF-Bilddatei) gespeichert werden. Mit Hilfe der Informationen in der Bilddatei ist es möglich, in Bildbearbeitungsprogrammen Profile für Bildaufnahmen mit bestimmten Objektiven zu erzeugen, die die nachträgliche Bearbeitung wesentlich vereinfachen. Sofern die Objektivgrunddaten als Zusatzinformation im Negativbild einer analogen Kamera, ähnlich dem bekannten Einblenden von Datum-Codes gespeichert werden, ist es auf einfache Weise möglich, bei der Herstellung des Fotopositivs diese zur Bildkorrektur zur verwerten.

Selbstverständlich ist es ebenfalls möglich, ein entsprechendes Verfahren statt mit Lichtsender-Lichtempfänger-Sensoren auch mit anderen Sensoren durchzuführen, die in der Lage sind, die ihnen zugeordneten speziell präparierten Flächenbereiche an der Anriegelungsvorrichtung berührungslos und ohne offen liegende elektrische Kontakte zu erfassen. Zum Beispiel könnten in den weißen oder schwarzen Lack Partikel eingebracht werden, die die magnetische Eigenschaft der Flächenbereiche verändern und auf diese Weise eine Detektierung der Codierung mit in der Anlagefläche der Kamera angeordneten Magnetfeldsensoren ermöglichen. Wesentlich ist die leichte Nachrüstbarkeit bestehender Objektive ohne aufwändige offen liegende elektrische Kontakte.

Eine Vorrichtung zur Durchführung des zuvor beschriebenen Verfahrens besteht aus einer Kamera eines Kamerasystems mit einer Auflagefläche zum Aufsetzen der Anriegelungsvorrichtung eines Wechselobjektivs, wobei die Auflagefläche ein Rastschloss als Orientierungsmarkierung und Feststelleinrichtung für die Anriegelungsvorrichtung des Wechselobjektivs aufweist und in der Auflagefläche entgegen der Drehrichtung der Anriegelung beabstandet zum Rastschloss in einem Winkelsegment zwischen 90° und 180° ein Bereich zur Anbringung von Sensoren zum Erkennen von an der Anriegelungsvorrichtung angebrachten Codierungen vorgesehen ist. Da die Auflagefläche Bestandteil einer mechanisch stark beanspruchten Bajonettaufnahme ist, die mit mehreren Schrauben am Kameragehäuse befestigt wird, im Bereich von Schraubverbindungen allerdings keine Sensoren anbringbar sind, hat es sich also besonders vorteilhaft herausgestellt, den Bereich zur Anbringung von Sensoren zwischen 110° und 150° vorzusehen. Ein zusätzlicher Kontrollsensor kann aber an anderer Stelle zwischen den Schraubenverbindungen vorgesehen sein.

Der Sensorbereich weist eine Ausnehmung zur Aufnahme eines Sensorarrays oder mehrere Ausnehmungen zur Aufnahme einzelner Sensoren auf. Auf diese Weise können die Sensoren vor mechanischen Umwelteinflüssen geschützt in der Auflagefläche integriert angeordnet werden.

Das Sensorarray kann als vorgefertigt einzufügende Platine ausgeführt sein. Dabei können z.B. die lichtsendenden und lichtempfangenden Elemente mit ihren elektrischen Anschlüssen auf der Rückseite der Platine angeordnet und diesen Elementen lichtleitende Übertragungsleitungen vorgeschaltet sein.

Die erfindungsgemässe Ausgestaltung der Sensoren besteht darin, jeweils einen Lichtsender und einen Lichtempfänger vorzusehen, die in radialer Richtung zueinander beabstandet sind, wobei der Lichtsender in der Nähe des äußeren Randes der Auflagefläche und der Lichtempfänger in der Nähe des inneren Randes der kreisförmigen Auflagefläche angeordnet sind. Selbstverständlich können auch der Lichtempfänger in der Nähe des äußeren Randes der Auflagefläche und der Lichtsender in der Nähe des inneren Randes der kreisförmigen Auflagefläche angeordnet sein. Wesentlich ist eine gute geometrische Ausrichtung der Sensoren gegenüber den jeweils zugeordneten Reflexions- und Absorptionsflächen auf der Anriegelungsvorrichtung des Wechselobjektivs. Die Refiexions- und Absorbtionsflächen sind in vorteilhafter Weise in ihrer flächigen Ausdehnung größer als die ihnen jeweils zugeordneten Sensorbereiche, um ein eventuell vorhandenes rotatorisches Spiel des Wechselobjektivs in der Rastschloss-Verbindung ausgleichen zu können und damit eine erfolgreiche Detektion sicherzustellen.

Die den Sensor bildenden Lichtsender und Lichtempfänger sind zum Schutz vor Umwelteinflüssen mit einer lichtleitenden Vergussmasse geschützt. Zur Verhinderung der direkten Lichtleitung vom Lichtsender zum Lichtempfänger ist zwischen diesen ein dünner lichtundurchlässiger Steg eingebracht.

In besonders vorteilhafter Weise sind mindestens zwei, vorzugsweise sechs Sensoren in äquidistanter Anordnung als lineares Array ausgebildet. Auf diese Weise kann der lichtundurchlässige Steg durch einen einfachen Schnitt mit einem dünnen Sägeblatt in das bereits vergossene Sensorarray eingefügt werden. Der dabei entstehende Schlitz wird anschließend mit einer lichtundurchlässigen Vergussmasse ausgefüllt, die eine direkte Lichtleitung vom Lichtsender zum Lichtempfänger wirksam verhindert. Die Anordnung von Lichtsendern und Lichtempfängern in einer Linie nebeneinander tangential zum Umfang der Auflagefläche ist ebenfalls möglich, wenngleich dann zur Verhinderung einer übersprechenden Lichtleitung mehrere radial ausgeführte lichtundurchlässige Stege eingefügt werden müssen.

In einer weiteren vorteilhaften Ausführungsform sind die Sensoren derart angeordnet, dass sie zusammen mit lichtreflektierenden oder lichtabsorbierenden Flächenbereichen auf der Anriegelungsvorrichtung des Wechselobjektivs Reflexlichtschranken bilden. Diese Anordnung ermöglicht auf einfache Weise die Identifizierung von angeschlossenen Wechselobjektiven und benötigt wenige kostengünstige Bauteile.

Selbstverständlich ist die Anwendung des Verfahrens nicht auf die Identifizierung von Wechselobjektiven eines Kamerasystems beschränkt. In ebenso vorteilhafter Weise können auch Okulare oder Zubehörteile z.B. eines Fernrohrsystems identifiziert werden.

Die Erfindung wird nachfolgend anhand eines in der Zeichnung schematisch dargestellten Ausführungsbeispiels beschrieben und näher erläutert.

Dabei zeigen:
- Fig. 1: eine Auflagefläche einer Kamera mit Sensorbereich und ein Wechselobjektiv,
- Fig. 2: einen Sensorträger mit ungeschütztem Sensorarray,
- Fig. 3: eine Schnittdarstellung des Sensorträgers aus Fig. 2,
- Fig. 4: einen Sensorträger mit geschütztem Sensorarray und
- Fig. 5: eine Schnittdarstellung des Sensorträgers aus Fig. 4.

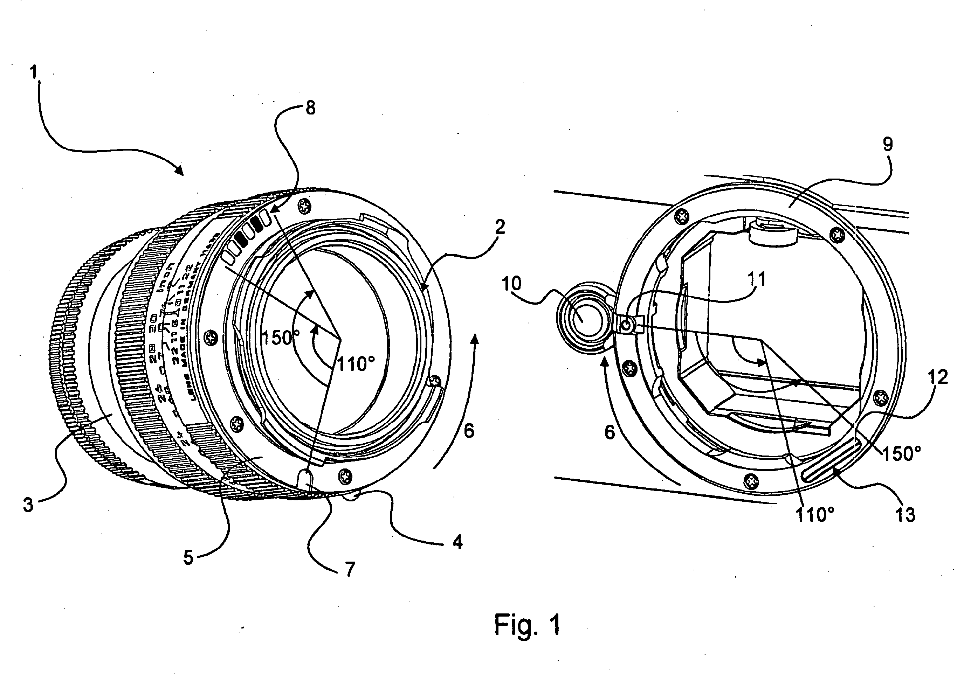

In Fig. 1 ist ein Wechselobjektiv 1 mit einer Anriegelvorrichtung 2 und einem Objektivgehäuse 3 dargestellt. Das Objektivgehäuse 3 weist eine Orientierungsmarkierung 4 auf. In einer Ansetzfläche 5 der Anriegelvorrichtung 2 des Wechselobjektivs 1 befindet sich entgegen der mit Hilfe eines Pfeils 6 dargestellten Drehrichtung der Anriegelung beabstandet von der Orientierungsmarkierung 4 eine Rastvertiefung 7. Auf der Ansetzfläche 5 befinden sich weiter entgegen der Drehrichtung 6 beabstandet zur Rastvertiefung 7 sechs getrennt nebeneinander liegende Reflexions- und Absorbtionsflächen 8. Die Reflexions- und Absorbtionsflächen 8 liegen in einem Winkelsegment von vorzugsweise 110° bis 150° entgegen der Drehrichtung der Anriegelung 6 von der Rastvertiefung 7 entfernt.

Zum drehrichtigen Aufsetzen der Anriegelvorrichtung 2 des Wechselobjektivs 1 auf eine Auflagefläche 9 der nicht weiter dargestellten Kamera wird die Orientierungsmarkierung 4 mit einem Betätigungsknopf 10 eines in der Auflagefläche 9 angeordneten Rastschlosses 11 in Übereinstimmung gebracht. Die Auflagefläche 5 des Wechselobjektivs 1 und die Auflagefläche 9 der Kamera werden durch eine Zusammenführungsbewegung in Berührung gebracht und durch eine Drehung in Drehrichtung der Anriegelung 6 miteinander verbunden. Nach erfolgter Anriegelung rastet das Rastschloss 11 in die Rastvertiefung 7 ein und bildet eine drehfeste Verbindung, die durch Drücken des Betätigungsknopfes 10 wieder gelöst werden kann.

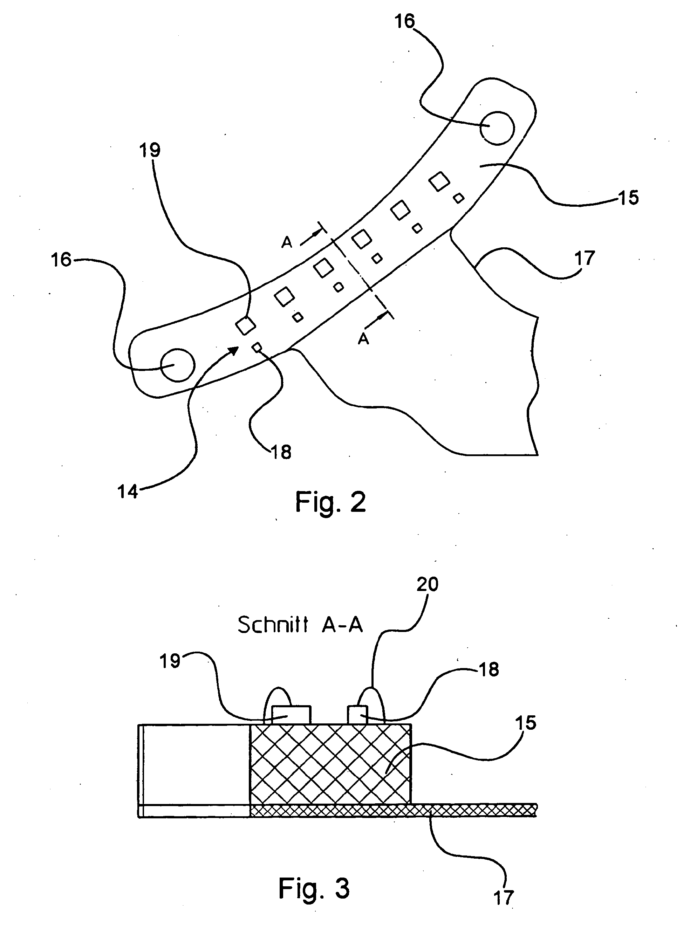

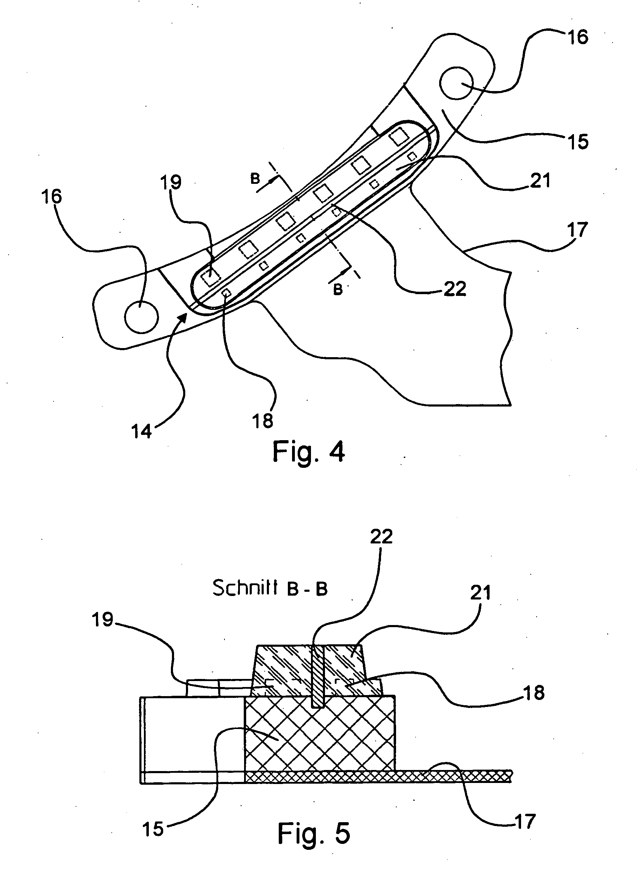

In einem Winkelbereich von vorzugsweise 110° bis 150° entgegen der Drehrichtung 6 beabstandet zum Rastschloss 11 befindet sich in der Auflagefläche 9 eine Ausnehmung 12 für einen Sensorbereich 13. In dem Sensorbereich 13 ist ein in Fig. 2 und 5 dargestelltes Sensorarray 14 angeordnet.

In Fig. 2 ist ein kreissegmentförmiger Sensorträger 15 für ein ungeschützt dargestelltes Sensorarray 14 zu sehen. An seinen beiden Enden weist der Sensorträger 15 Befestigungslöcher 16 zur Montage hinter der Auflagefläche 9 auf. Sensorsignale können mit Hilfe eines am Sensorträger 15 angebrachten Leiterbandes 17 an die Kameraelektronik weitergeleitet werden. Das Sensorarray 14 besteht aus sechs Lichtsendern 18 und diesen zugeordneten sechs Lichtempfängern 19.

Zur Verdeutlichung der Anordnung von Lichtsendern 18 und Lichtempfängern 19 zeigt Fig. 3 eine Schnittdarstellung des Sensorträgers aus Fig. 2 entlang der Schnittlinie A - A. Der Sensorträger 15 weist in seinem oberen Bereich einen kleiner dargestellten Lichtsender 18 und einen etwas größer dargestellten Lichtempfänger 19 auf. Die elektrische Kontaktierung zum Leiterband 17 erfolgt mit Hilfe von Kontaktierungsdrähten 20.

Fig. 4 zeigt einen Sensorträger 15 mit einem durch eine lichtleitende Vergussmasse 21 geschütztem Sensorarray 14. In die lichtleitende Vergussmasse 21 ist ein dünner lichtundurchlässiger Steg 22 zur optischen Trennung von Lichtsendern 18 und Lichtempfängern 19 eingebracht.

Fig. 5 zeigt eine Schnittdarstellung des geschützten Sensorträgers 15 aus Fig. 4. entlang der Schnittlinie B-B. Lichtsender 18 und Lichempfänger 19 sind innerhalb der lichtleitenden Vergussmasse 21 angedeutet. Deutlich zu sehen ist der lichtundurchlässige Steg 22, der durch die lichtleitende Vergussmasse 21 bis in den auf dem Leiterband 17 befestigten Sensorträger 15 eingebracht ist.

### Bezugszeichenliste

- 1: Wechselobjektiv
- 2: Anriegelvorrichtung
- 3: Objektivgehäuse
- 4: Orientierungsmarkierung
- 5: Ansetzfläche des Wechselobjektivs
- 6: Drehrichtung der Anriegelung
- 7: Rastvertiefung
- 8: Reflexions- und Absorptionsflächen
- 9: Auflagefläche der Kamera
- 10: Betätigungsknopf
- 11: Rastschloss
- 12: Ausnehmung
- 13: Sensorbereich
- 14: Sensorarray
- 15: Sensorträger
- 16: Befestigungslöcher
- 17: Leiterband
- 18: Lichtsender
- 19: Lichtempfänger
- 20: Kontaktierungsdraht
- 21: lichtleitende Vergussmasse
- 22: lichtundurchlässiger Steg

## Patentansprüche

1. Verfahren zur Identifizierung von Wechselobjektiven (1), die mit einer Anriegelvorrichtung (2) in vorgegebener Lage mit einer Auflagefläche (9) an einer Kamera eines Kamerasystems verbunden werden können, wobei durch Detektion von in der Anriegelvorrichtung (2) vorhandenen, unterschiedlich Licht reflektierenden Codebereichen binär codierte Signale erzeugt werden, **dadurch gekennzeichnet, dass**
a) nach erfolgter Anriegelung eine definierte optische Strahlung von zwei oder mehr, vorzugsweise sechs, in der Auflagefläche (9) angeordneten Lichtsendern (18) auf zugeordnete, in radialer Richtung länglich ausgedehnte, vertiefte Reflexions- oder Absorptionsflächen (8) an der Anriegelvorrichtung (2) gerichtet wird, wobei die Reflexionsflächen mit weißem Lack und die Absorptionsflächen mit schwarzem Lack ausgelegt sind, und
b) die von den jeweiligen Reflexions-/Absorptionsflächen (8) zurückkehrende Strahlung von in radialer Richtung neben den Lichtsendern (18) in der Auflagefläche (9) angeordneten Lichtempfängern (19) aufgenommen wird.

2. Verfahren nach Patentanspruch 1, **dadurch gekennzeichnet, dass** das binär codierte Signal einer Rechnereinheit der Kamera zugeführt wird, die dem Code neben bestimmten Grunddaten des Wechselobjektivs (1), wie Brennweite und Öffnungsverhältnis auch Objektiv-Individualdaten, wie z.B. besondere Korrekturwerte zuordnet.

3. Verfahren nach Patentanspruch 1 oder 2, **dadurch gekennzeichnet, dass** die Lichtsender (18) zyklisch alternierend in vorbestimmten Zeitintervallen eingeschaltet und die ihnen zugeordneten Lichtempfänger (19) synchron dazu die zurückkehrende Strahlung aufnehmen.

4. Verfahren nach Patentanspruch 3, **dadurch gekennzeichnet, dass** während eines Zyklus gleichzeitig mehrere nicht benachbarte Lichtsender- und Lichtempfängerpaare (18, 19) ausgewertet werden.

5. Verfahren nach einem der vorhergehenden Patentansprüche 1 bis 4, **dadurch gekennzeichnet, dass** die Identifizierung eines Wechselobjektivs (1) zeitlich getrennt von einer Bildaufnahme mit dem Wechselobjektiv (1) erfolgt.

6. Verfahren nach Patentanspruch 2, **dadurch gekennzeichnet, dass** die Zuordnung zwischen dem binär codierten Signal und den Grunddaten des Wechselobjektivs (1) herstellerseitig dauerhaft in einem Datenspeicher der Rechnereinheit abgelegt wird und Objektiv-Individualdaten mit Hilfe von herstellerseitig bereitgestellten Datensätzen in einen veränderbaren Datenspeicher der Rechnereinheit transferierbar sind.

7. Verfahren nach Patentanspruch 2 oder 6, **dadurch gekennzeichnet, dass** bei einer digitalen Bildaufnahme unter Berücksichtigung der zu dem Wechselobjektiv (1) gespeicherten Grund- und Individualdaten eine rechnergestützte Bildkorrektur oder Optimierung der Bildqualität durchgeführt wird und die korrigierten Bilddaten in einem Bilddatenspeicher gespeichert werden.

8. Verfahren nach einem der Patentansprüche 2 bis 7, **dadurch gekennzeichnet, dass** die jeweils ermittelten Objektivgrunddaten als Zusatzinformation im Bild oder in der Bilddatei, z.B. dem Header einer EXIF-Bilddatei, gespeichert werden.

9. Vorrichtung eingerichtet zur Durchführung des Verfahrens nach einem der Patentansprüche 1 bis 8 bestehend aus einer Kamera eines Kamerasystems mit einer Auflagefläche (9) zum Aufsetzen der Anriegelvorrichtung (2) eines Wechselobjektivs (1), wobei die Auflagefläche (9) ein Rastschloss (11) als Orientierungsmarkierung (10) und Feststelleinrichtung für die Anriegelvorrichtung (2) des Wechselobjektivs (1) aufweist, **dadurch gekennzeichnet, dass** in der Auflagefläche (9) entgegen der Drehrichtung der Anriegelung (6) beabstandet zum Rastschloss (11) in einem Winkelsegment von 90° bis 180°, vorzugsweise 110° bis 150°, ein Bereich (13) mit Sensoren (18, 19) zum Erkennen von an der Anriegelvorrichtung (2) angebrachten, in radialer Richtung länglich ausgedehnten Codierungen (8) vorgesehen ist, wobei als Sensoren jeweils ein Lichtsender (18) und ein Lichtempfänger (19) vorgesehen sind, die in radialer Richtung in einer gemeinsamen Ebene zueinander beabstandet sind, wobei der Lichtsender (18) in der Nähe des äußeren Randes und der Lichtempfänger (19) in der Nähe des inneren Randes der Auflagefläche (9) oder umgekehrt angeordnet ist.

10. Vorrichtung nach Patentanspruch 9, **dadurch gekennzeichnet, dass** der Sensorbereich (13) eine Ausnehmung (12) zur Aufnahme eines Sensorarrays (14) oder mehrere Ausnehmungen zur Aufnahme einzelner Sensoren (18, 19) aufweist.

11. Vorrichtung nach Patentanspruch 9, **dadurch gekennzeichnet, dass** die den Sensor bildenden Lichtsender (18) und Lichtempfänger (19) zum Schutz vor Umwelteinflüssen mit einer lichtleitenden Vergussmasse (21) geschützt sind und zur Verhinderung der direkten Lichtleitung vom Lichtsender (18) zum Lichtempfänger (19) zwischen diesen ein dünner lichtundurchlässiger Steg (22) eingebracht ist.

12. Vorrichtung nach Patentanspruch 10, **dadurch gekennzeichnet, dass** mindestens zwei, vorzugsweise sechs Sensoren (18, 19) in äquidistanter Anordnung als lineares Array (14) ausgebildet sind.

13. Vorrichtung nach Patentanspruch 9, **dadurch gekennzeichnet, dass** die Sensoren (18, 19) derart angeordnet sind, dass sie zusammen mit lichtreflektierenden oder lichtabsorbierenden Flächenbereichen (8) auf der Anriegelvorrichtung (2) des Wechselobjektivs (1) Reflexlichtschranken bilden.

## Claims

1. Method for identifying interchangeable lenses (1) that can be connected with the aid of a locking apparatus (2) in a prescribed position to a support surface (9) on a camera of a camera system, binary-coded signals being generated by detecting coded regions present in the locking apparatus and reflecting light differently, **characterized in that**
a) after the locking operation is performed a defined optical radiation is directed from two or more, preferably six light transmitters (18) arranged in the support surface (9) onto assigned, depressed reflecting or absorbing surfaces (8), elongated in a radial direction, on the locking apparatus (2), the reflecting surfaces being constructed with a white lacquer, and the absorbing surfaces with a black lacquer, and
b) the radiation returning from the respective reflecting/absorbing surfaces (8) is picked up by light receivers (19) arranged in a radial direction next to the light transmitters (18) in the support surface (9).

2. Method according to Patent Claim 1, **characterized in that** the binary coded signal is fed to a computer unit of the camera, which assigns the code specific basic data of the interchangeable lens (1) such as focal length and aperture ratio as well as lens-specific data such as, for example, specific correction values.

3. Method according to Patent Claim 1 or 2, **characterized in that** the light transmitters (18) are switched on in cyclically alternating fashion at predetermined time intervals, and the light receivers (19) assigned to them pick up the returning radiation synchronously therewith.

4. Method according to Patent Claim 3, **characterized in that** a number of nonadjacent pairs (18, 19) of light transmitters and light receivers are evaluated simultaneously during a cycle.

5. Method according to one of the preceding Patent Claims 1 to 4, **characterized in that** the identification of an interchangeable lens (1) is performed separately in time from an image pickup by the interchangeable lens (1).

6. Method according to Patent Claim 2, **characterized in that** the assignment between the binary coded signal and the basic data of the interchangeable lens (1) is permanently stored by the manufacturer in a data memory of the computer unit, and lens-specific data can be transferred into a variable data memory of the computer unit with the aid of data records provided by the manufacturer.

7. Method according to Patent Claim 2 or 6, **characterized in that** a computer-aided image correction or optimization of the image quality is carried out in the event of a digital image pickup taking account of the basic and specific data stored in relation to the interchangeable lens (1), and the corrected image data are stored in an image data memory.

8. Method according to one of Patent Claims 2 to 7, **characterized in that** the respectively determined basic lens data are stored as additional information in the image or in the image file, for example the header of an EXIF image file.

9. Apparatus set up for carrying out the method according to one of Patent Claims 1 to 8, comprising a camera of a camera system with a support surface (9) for mounting the locking apparatus (2) of an interchangeable lens (1), the support surface (9) having a latching lock (11) as orientation mark (10), and a fixing device for the locking apparatus (2) of the interchangeable lens (1), **characterized in that** a region (13) having sensors (18, 19) for detecting codings (8), provided on the locking apparatus (2) and elongated in a radial direction, is provided in the support surface (9) in a fashion counter to the direction of rotation of the locking operation (6) and at a spacing from the latching lock (11) in an angle segment from 90° to 180°, preferably 110° to 150°, a light transmitter (18) and a light receiver (19) that are at a spacing from one another in a radial direction in a common plane being provided in each case as sensors, the light transmitter (18) being arranged in the vicinity of the outer edge, and the light receiver (19) being arranged in the vicinity of the inner edge of the support surface (9), or vice versa.

10. Apparatus according to Patent Claim 9, **characterized in that** the sensor region (13) has a cutout (12) for holding a sensor array (14) or a number of cutouts for holding individual sensors (18, 19).

11. The apparatus according to Patent Claim 9, **characterized in that** the light transmitters (18) and light receivers (19) forming the sensor are protected by a light-guiding casting compound (21) intended to protect against environmental influences, and in order to prevent the direct guidance of light from the light transmitter (18) to the light receiver (19) a thin lightproof web (22) is introduced between them.

12. The apparatus according to Patent Claim 10, **characterized in that** at least two, preferably six sensors (18, 19) are constructed in an equidistant arrangement as linear array (14).

13. The apparatus according to Patent Claim 9, **characterized in that** the sensors (18, 19) are arranged in such a way that they form reflected light barriers together with light-reflecting or light-absorbing surface regions (8) on the locking apparatus (2) of the interchangeable lens (1).

## Revendications

1. Procédé pour identifier des objectifs interchangeables (1) qui peuvent être reliés avec un dispositif de verrouillage (2) dans une position prédéfinie avec une surface d'appui (9) sur une caméra d'un système de caméras, des signaux à codage binaire étant générés en détectant des zones de codage présentes dans le dispositif de verrouillage (2) qui réfléchissent différemment la lumière, **caractérisé en ce que**
a) après avoir effectué un verrouillage, un rayonnement optique défini provenant de deux émetteurs de lumière (18) ou plus, de préférence six, disposés dans la surface d'appui (9), est dirigé sur des surfaces de réflexion ou d'absorption (8) associées sur le dispositif de verrouillage (2), enfoncées et allongées dans le sens radial, les surfaces de réflexion étant conçues avec du vernis blanc et les surfaces d'absorption avec du vernis noir, et
b) le rayonnement renvoyé par les surfaces de réflexion/d'absorption (8) respectives est capté par des récepteurs de lumière (19) disposés dans le sens radial à côté des émetteurs de lumière (18) dans la surface d'appui (9).

2. Procédé selon la revendication 1, **caractérisé en ce que** le signal à codage binaire est acheminé à un calculateur de la caméra qui associe au code, outre certaines données de base de l'objectif interchangeable
(1) comme la distance focale et le taux d'ouverture, également des données individuelles de l'objectif comme, par exemple, des indices de correction.

3. Procédé selon la revendication 1 ou 2, **caractérisé en ce que** les émetteurs de lumière (18) sont mis en marche selon un cycle alterné à des intervalles donnés et les récepteurs de lumière (19) qui leur sont associés captent le rayonnement renvoyé de manière synchrone à ce cycle.

4. Procédé selon la revendication 3, **caractérisé en ce que** plusieurs paires d'émetteurs de lumière et de récepteurs de lumière (18, 19) non voisines sont analysées simultanément pendant un cycle.

5. Procédé selon l'une des revendications 1 à 4, **caractérisé en ce que** l'identification d'un objectif interchangeable (1) s'effectue séparément dans le temps d'une acquisition d'image avec l'objectif interchangeable (1).

6. Procédé selon la revendication 2, **caractérisé en ce que** l'affectation entre le signal à codage binaire et les données de base de l'objectif interchangeable (1) est enregistrée à demeure par le fabricant dans une mémoire de données du calculateur et les données individuelles de l'objectif peuvent être transférées dans une mémoire de données modifiable du calculateur à l'aide de jeux de données fournis par le fabricant.

7. Procédé selon la revendication 2 ou 6, **caractérisé en ce que** lors de l'acquisition d'une image numérique, une correction de l'image ou une optimisation de la qualité de l'image assistée par ordinateur est effectuée en tenant compte des données de base et individuelles enregistrées en rapport avec l'objectif interchangeable (1) et les données d'image corrigées sont enregistrées dans une mémoire de données d'image.

8. Procédé selon l'une des revendications 2 à 7, **caractérisé en ce que** les données de base d'objectif à chaque fois déterminées sont enregistrées sous la forme d'informations supplémentaires dans l'image ou dans le fichier d'image, par exemple dans l'en-tête d'un fichier d'image EXIF.

9. Dispositif conçu pour mettre en oeuvre le procédé selon l'une des revendications 1 à 8, constitué d'une caméra d'un système de caméra doté d'une surface d'appui (9) pour recevoir le dispositif de verrouillage (2) d'un objectif interchangeable (1), la surface d'appui (9) présentant un verrou d'enclenchement (11) faisant office de repère d'orientation (10) et un dispositif de blocage pour le dispositif de verrouillage (2) de l'objectif interchangeable (1), **caractérisé en ce qu'**une zone (13) munie de capteurs (18, 19) destinés à reconnaître des éléments de codage (8) allongés dans le sens radial placés sur le dispositif de verrouillage (2) est prévue dans la surface d'appui (9), à l'opposé du sens de rotation du verrouillage (6), à distance du verrou d'enclenchement (11) dans un segment angulaire de 90° à 180°, de préférence de 110° à 150°, les capteurs prévus étant à chaque fois un émetteur de lumière (18) et un récepteur de lumière (19) qui sont espacés l'un de l'autre dans le sens radial dans un plan commun, l'émetteur de lumière (18) étant disposé à proximité du bord extérieur et le récepteur de lumière (19) à proximité du bord intérieur de la surface d'appui (9) ou inversement.

10. Dispositif selon la revendication 9, **caractérisé en ce que** la zone de détection (13) présente un creux (12) pour recevoir une matrice de capteurs (14) ou plusieurs creux pour recevoir des capteurs individuels (18, 19).

11. Dispositif selon la revendication 9, **caractérisé en ce que** l'émetteur de lumière (18) et le récepteur de lumière (19) qui forment le capteur sont protégés contre les influences externes par une masse de scellement (21) non conductrice et une nervure (22) mince opaque est installée entre l'émetteur de lumière (18) et le récepteur de lumière (19) pour éviter un passage direct de la lumière de l'un vers l'autre.

12. Dispositif selon la revendication 10, **caractérisé en ce qu'**au moins deux, de préférence six capteurs (18, 19) équidistants sont configurés sous la forme d'une matrice linéaire (14).

13. Dispositif selon la revendication 9, **caractérisé en ce que** les capteurs (18, 19) sont disposés de telle sorte qu'ils forment, en combinaison avec des zones de surface (8) réfléchissant la lumière ou absorbant la lumière sur le dispositif de verrouillage (2) de l'objectif interchangeable (1), des barrières photoélectriques à réflexion.
